**Europäisches Patentamt**

**European Patent Office**

**Office européen des brevets**

(19)

(11) Veröffentlichungsnummer: **0 068 180**
**B1**

## ‑EUROPÄISCHE PATENTSCHRIFT

(12)

(45) Veröffentlichungstag der Patentschrift:
27.08.86

(21) Anmeldenummer: **82104943.4**

(22) Anmeldetag: **05.06.82**

(51) Int. Cl.⁴: **H 05 B 7/00**, G 05 F 1/08,
H 05 B 7/148

(54) Regeleinrichtung für einen Gleichstrom-Lichtbogenofen.

(30) Priorität: **12.06.81 DE 3123297**

(43) Veröffentlichungstag der Anmeldung:
**05.01.83 Patentblatt 83/1**

(45) Bekanntmachung des Hinweises auf die Patenterteilung:
**27.08.86 Patentblatt 86/35**

(84) Benannte Vertragsstaaten:
**AT BE CH FR GB IT LI NL SE**

(56) Entgegenhaltungen:
**EP - A - 0 023 058**
**DE - A - 2 238 006**
**DE - A - 2 440 960**
**DE - A - 2 731 014**
**DE - A - 2 948 787**
**DE - B - 1 183 185**
**US - A - 3 435 121**
**US - A - 4 096 344**

(73) Patentinhaber: **BROWN, BOVERI & CIE**
**Aktiengesellschaft, Kallstadter Strasse 1,**
**D-6800 Mannheim 31 (DE)**

(72) Erfinder: **Müller, Heinz, Dipl.-Ing., Kastanienweg 11,**
**D-6945 Hirschberg (DE)**
Erfinder: **Langlotz, Helmut, Magnollenstrasse 8,**
**D-6143 Lorsch (DE)**

(74) Vertreter: **Kempe, Wolfgang, Dr. et al, c/o Brown, Boveri**
**& Cie AG Postfach 351, D-6800 Mannheim 1 (DE)**

## Beschreibung

Die Erfindung bezieht sich auf eine Regeleinrichtung für einen direkt beheizten Gleichstrom-Lichtbogenofen zum Schmelzen von Metall, mit einer Elektrodenverstelleinrichtung zur Einstellung des Abstandes zwischen Elektrode und Schmelzbad, mit einem Stromrichter zur Speisung der Elektrode mit Gleichstrom, mit einem Stromregler, dem eingangsseitig die Differenz zwischen einem vorgebbaren Gleichstrom-Sollwert und einem gemessenen Gleichstrom-Istwert zugeführt wird und dessen Ausgangssignal als Steuerspannungssignal für den Stromrichter dient sowie mit einem Spannungsregler, dem eingangsseitig die Differenz zwischen einem vorgebbaren Gleichspannungs-Sollwert und einem gemessenen Gleichspannungs-Istwert zugeführt wird und der ein Ausgangssignal an die Elektrodenverstelleinrichtung abgibt.

Eine solche Regeleinrichtung für einen Gleichstrom-Lichtbogenofen ist aus der EP-A- 0 023 058 bekannt. Diese bekannte Regeleinrichtung weist also ein erstes Regelsystem auf, mit welchem die Position der Elektrode in Funktion einer ersten elektrischen Lichtbogencharakteristik (z.B. Widerstand, Spannung, Strom, Leistung) eingestellt wird. Ein zweites, vom ersten System unabhängiges Regelsystem dient zur Änderung der Speisespannung der Elektroden in Abhängigkeit von einer zweiten Lichtbogencharakteristik. Das vergleichsweise träge erste Regelsystem wird somit durch ein wesentlich rascher wirkendes zweites System erweitert, wodurch ein gleichmässigeres Einbringen von Wirkleistung in den Ofen sowie eine Reduktion der Netzrückwirkungen erzielt wird. Allerdings arbeiten die Regelsysteme bei verschiedenen Betriebszuständen, z.B. Kurzschluss durch hochspritzenden flüssigen Stahl bzw. nachfallenden Schrott oder Lichtbogenabriss durch Zusammenbruch des Schrottgebirges, noch nicht optimal, da die Ofeneigenschaften das Führungsverhalten des zweiten Systems beeinflussen.

Aus Brunklaus «Industrieöfen», 4. Auflage, 1979, Vulkan-Verlag Essen, Seite 169 bis 173 und Seite 572 bis 576 sind Lichtbogenöfen zum Schmelzen von Metallen bekannt. Als unmittelbar oder direkt beheizte Lichtbogenöfen werden dabei solche Lichtbogenöfen bezeichnet, bei denen das Schmelzbad selbst als eine der beiden Elektroden dient und der Wärmeübergang durch den zwischen Graphit-Elektrode und Schmelzbad brennenden Lichtbogen unmittelbar auf die Schmelze erfolgt. Aus der genannten Literaturstelle ist es auch bekannt, Gleichstrom anzuwenden, wenn die elektrolytische Wirkung für den betreffenden metallurgischen Prozess Bedingung ist, z.B. bei der Erzeugung von Aluminium. Eine Regeleinrichtung zur Regelung eines derartigen Gleichstrom-Lichtbogenofens wird jedoch nicht angegeben. Drehstrom-Lichtbogenöfen zum Erschmelzen von Stahl aus Schrott sind bereits seit vielen Jahren bekannt und in Betrieb. Sie haben den Nachteil, dass sie sehr stark auf die Spannungsform des sie speisenden Netzes zurückwirken, insbesondere in einem Frequenzbereich, in dem das menschliche Auge sehr empfindlich ist. Die Netzrückwirkungen des Ofens werden daher in Form von Flicker in den elektrischen Beleuchtungsanlagen, die aus diesem Netz gespeist werden, wahrgenommen.

Bei nicht ausreichender Kurzschlussleistung des Netzes sind daher oft aufwendige dynamische Kompensationsanlagen erforderlich, um diese Netzrückwirkungen auf ein zulässiges Mass zu begrenzen.

Der Erfindung liegt davon ausgehend die Aufgabe zugrunde, eine Regeleinrichtung für einen Gleichstrom-Lichtbogenofen der eingangs genannten Art anzugeben, bei dem die Ofeneigenschaften aus dem Führungsverhalten des Stromregelkreises eliminiert sind.

Diese Aufgabe wird erfindungsgemäss dadurch gelöst, dass das Ausgangssignal des Stromreglers mit dem Gleichspannungs-Istwert als Vorsteuerwert summiert wird.

In diesem Zusammenhang ist aus der DE-A 2 731 014 eine Einrichtung zur Regelung der Lichtbogenlänge eines Drehstrom-Lichtbogenofens bekannt, bei der ein Impedanzregler zur Ansteuerung einer Elektrodenverstelleinrichtung vorgesehen ist. Dem Impedanzregler ist ein die Lichtbogenspannung regelnder Kreis vorgeordnet, dem als Istwert die Lichtbogenspannung zugeführt ist. Die Ausgangsgrösse des Regelkreises für die Lichtbogenspannung korrigiert dadurch den Arbeitspunkt des Impedanzreglers, wodurch die Einbusse an Wirkleistungsaufnahme bei betriebsmässig auftretenden Elektroden-Kurzschlüssen und Lichtbogenabrissen verringert wird.

Aus der DE-A- 2 948 787 ist eine Anordnung zur Elektrodenregelung eines Drehstrom-Lichtbogenofens bekannt, bei der ebenfalls ein Impedanzregler das Stellglied für die Höheneinstellung der Elektrode(n) steuert. Zur Bildung des Impedanz-Istwertes wird die Elektrodenspannung erfasst.

Beiden vorgenannten Einrichtungen ist gemeinsam, dass lediglich ein einziger Regelkreis mit der Elektrodenverstellmechanik als Stellglied vorgesehen ist. Die Impedanz wird als Ersatzgrösse für die Regelung der Lichtbogenlänge benutzt. Die Lichtbogenspannung wird nicht zum Zwecke der Vorsteuerung eines zweiten, unabhängigen Regelkreises erfasst, sondern lediglich zur Impedanzbildung bzw. -regelung. Im Unterschied hierzu sind bei der Erfindung zwei unabhängige Regelkreise vorgesehen, und zwar ein Stromregelkreis mit dem Stromrichter als Stellglied und ein Spannungsregelkreis mit der Elektrodenverstelleinrichtung als Stellglied, wobei das Ausgangssignal des Stromreglers mit dem Lichtbogenspannungs-Istwert als Vorsteuerwert summiert wird.

Vorteilhafte Ausgestaltungen der Erfindung sind in den Unteransprüchen angegeben.

Die mit der Erfindung verbundenen Vorteile liegen insbesondere darin, dass die Parameter des Stromreglers wegen der Vorsteuerung des Stromrichters mit der Lichtbogenspannung auf den kurzgeschlossenen Ofen optimierbar sind, d.h. auf einen ohmsch-induktiven Laskreis mit dem Widerstand des kurzgeschlossenen Ofenkreises und der Induktivität der Glättungsdrossel. Stationär ist dann der Ausgang des Stromregelkreises immer nahe 0 Volt. Ein weiterer Vorteil besteht darin, dass die Regeleinrichtung schnell auf verschiedene Betriebszufälle, wie Kurzschluss durch nachfallenden Schrott oder durch hochspritzendes flüssiges Metall und Lichtbogenabriss durch Zusammenbruch des «Schrottgebirges» anspricht und unzulässig hohe Netzrückwirkungen, insbesondere im wichtigen Frequenzbereich 20 Hz vermeidet. Durch genaue Regelung des Gleichstroms wird vorteilhaft ein geringer Elektrodenverbrauch sowie geringe Staub- und Lärmentwicklung ermöglicht.

Ein Ausführungsbeispiel der Erfindung ist nachfolgend anhand der Zeichnungen erläutert.

Es zeigen:

Fig. 1 eine Regeleinrichtung zur Regelung eines Gleichstrom-Lichtbogenofens,

Fig. 2 und 3 zusätzliche Einrichtungen zur Beeinflussung des Stromrichters,

Fig. 4 zusätzliche Einrichtungen für einen «Schnellrücklauf der Elektrode bei Dauer-Kurzschluss» und für ein «Schnell-Absenken der Elektrode bei Abrissgefahr des Lichtbogens».

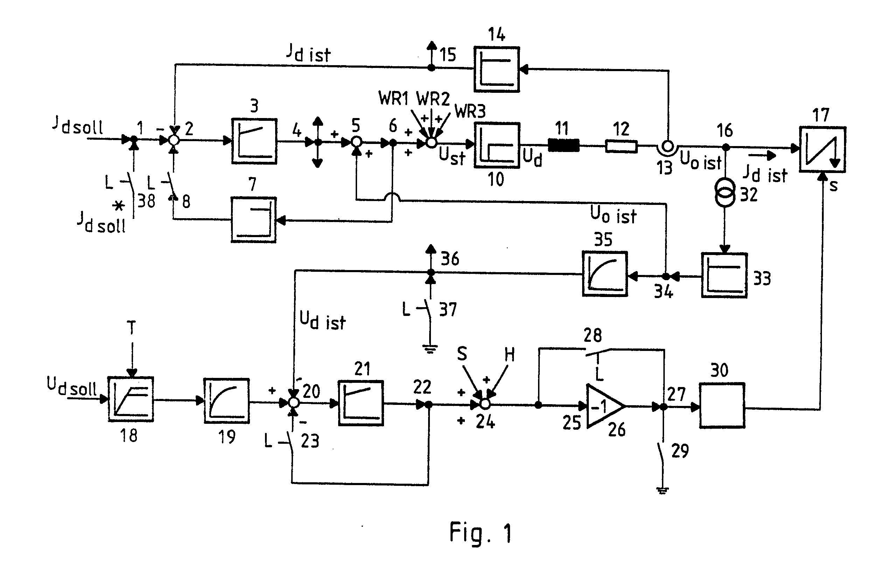

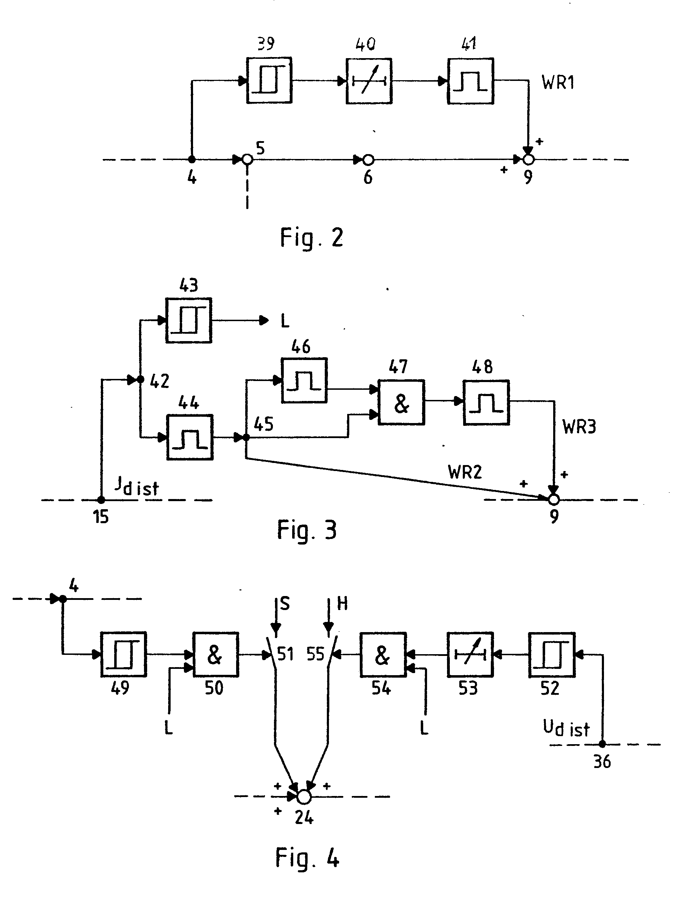

In Fig. 1 ist eine Regeleinrichtung zur Regelung eines Gleichstrom-Lichtbogenofens dargestellt. Ein Gleichstrom-Sollwert $I_{dsoll}$ wird über eine Verzweigungsstelle 1 einer Summationsstelle 2 mit positivem Vorzeichen zugeleitet. Die Summationsstelle 2 ist ausgangsseitig mit einem Stromregler 3 verbunden. Nach dem Stromregler 3 sind eine Verzweigungsstelle 4, eine Summationsstelle 5 sowie eine Verzweigungsstelle 6 in Reihe angeordnet. Die Verzweigungsstelle 4 ist, wie in den Figuren 2 und 4 dargestellt, verschaltet. An die Verzweigungsstelle 6 ist ein Verstärker 7 angeschlossen, dessen Ausgangssignal über einen Schalter 8 mit negativem Vorzeichen zur Summationsstelle 2 gelangt. Der Schalter 8 wird in Abhängigkeit eines Signales L gesteuert (siehe hierzu Fig. 3). An die Verzweigungsstelle 6 ist des weiteren eine Summationsstelle 9 angeschlossen, der mit positivem Vorzeichen die Signale WR1, WR2 und WR3 (siehe hierzu Fig. 2, 3) zugeleitet werden.

Das Ausgangssignal $U_{st}$ der Summationsstelle 9 wird einem Stromrichter 10 zugeführt. Der Stromrichter 10 (Ausgangsspannung $U_d$, Ausgangsstrom $I_d$) ist über eine Drosselspule 11 und den Widerstand des kurzgeschlossenen Ofens 12 mit einem Stromwandler 13 verbunden. Der Stromwandler 13 führt der Summationsstelle 2 einen Gleichstrom-Istwert $I_{dist}$ über einen Verstärker 14 und eine Verzweigungsstelle 15 mit negativem Vorzeichen zu. Die Verzweigungsstelle 15 ist, wie unter Fig. 3 beschrieben, verschaltet. Der Stromwandler 13 ist über eine Verzweigungsstelle 16 mit einer Elektrode 17 verbunden, die als kathodischer Fusspunkt des Lichtbogens im Ofengefäss dient. Der anodische Fusspunkt des Lichtbogens liegt im zu schmelzenden Schrott. Der Lichtbogenspannungs-Istwert ist mit $U_{0ist}$ bezeichnet.

Ein Gleichspannungs-Sollwert $U_{dsoll}$ wird über einen Begrenzer 18 und ein Glättungsglied 19 einer Summationsstelle 20 mit positivem Vorzeichen zugeleitet. Dem Begrenzer 18 wird eingangsseitig die Trafostufe T des den Stromrichter 10 vorgeschalteten Transformators zugeführt. Die Summationsstelle 20 ist ausgangsseitig mit einem Spannungsregler 21 verbunden. Der Spannungsregler 21 gibt ausgangsseitig einen Elektrodenverstellungs-Geschwindigkeits-Sollwert an die Verzweigungsstelle 22 ab, die dieses Ausgangssignal des Spannungsreglers 21 über einen Schalter 23 der Summationsstelle 20 mit negativem Vorzeichen zuführt. Der Schalter 23 wird in Abhängigkeit eines Signales L gesteuert (siehe Fig. 3). Nach der Verzweigungsstelle 22 ist eine Summationsstelle 24 vorgesehen, die über eine Verzweigungsstelle 25 mit einem Verstärker 26 verbunden ist. Die Summationsstelle 24 wird, wie in Fig. 4 dargestellt, mit weiteren Signalen beaufschlagt. Am Ausgang des Verstärkers 26 mit dem Verstärkungsfaktor $-1$ liegt eine Verzweigungsstelle 27, die über einen Schalter 28 mit der Verzweigungsstelle 25 verbunden ist. Der Schalter 28 wird in Abhängigkeit eines Signales L gesteuert (siehe Fig. 3). Die Verzweigungsstelle 27 kann ferner über einen Schalter 29 auf Nullpotential gelegt werden.

Der Verzweigungsstelle 27 nachgeschaltet ist eine Elektrodenverstelleinrichtung 30, die den Elektrodenabstand zwischen Elektrode und Schrott-Fusspunkt ( $=$ Lichtbogenlänge) s bestimmt.

An die Verzweigungsstelle 16 ist ein Spannungswandler 32 geschaltet, der ausgangsseitig über einen Verstärker 33, eine Verzweigungsstelle 34, ein Glättungsglied 35 und eine Verzweigungsstelle 36 den Gleichspannungs-Istwert $U_{dist}$ mit negativem Vorzeichen der Summationsstelle 20 zuführt. Über die Verzweigungsstelle 34 wird das Ausgangssignal $U_{0ist}$ des Verstärkers 33 der Summationsstelle 5 mit positivem Vorzeichen zugeführt. Die Verzweigungsstelle 36 ist über einen Schalter 37 mit Nullpotential verbindbar. Der Schalter 37 wird in Abhängigkeit des Signales L (siehe Fig. 3) gesteuert. Die weitere Verschaltung der Verzweigungsstelle 36 ist in Fig. 4 dargestellt. Der Verzweigungsstelle 1 ist über einen Schalter 38 ein fester Gleichstrom-Sollwert $I_{dsoll}^*$ zuführbar. Der Schalter 38 wird in Abhängigkeit des Signals L (siehe Fig. 3) gesteuert.

In Fig. 2 ist eine zusätzliche Einrichtung zur Beeinflussung des Stromrichters 10 dargestellt. An die Verzweigungsstelle 4 ist ein Signalbereichsmelder 39 angeschlossen. Dem Signalbereichsmelder 39 nachgeschaltet sind ein Zeitglied 40 sowie ein Blocker 41. Das Augangssignal WR1 des Blockers 41 wird der Summationsstelle 9 mit positivem Vorzeichen zugeführt.

In Fig. 3 ist eine weitere zusätzliche Einrichtung zur Beeinflussung des Stromrichters 10 dargestellt. Das an der Verzweigungsstelle 15 anstehende Signal $I_{dist}$ wird über eine weitere Verzweigungsstelle 42 Signalbereichsmeldern 43 und 44 zugeführt. Der Signalbereichsmelder 43 gibt ausgangsseitig ein Signal L = 1 ab, falls der Gleichstrom-Istwert $I_{dist}$ einen messbaren Wert überschreitet, d.h. falls Betrieb vorliegt. Das Ausgangssignal des Signalbereichsmelders 43 beträgt L = 0, falls auch der Gleichstrom-Istwert $I_{dist}$ den Wert Null aufweist. Die Schalter 8, 23, 28, 34, 37, 38 der Fig. 1 werden in Abhängigkeit des Signales L gesteuert.

Der Signalbereichsmelder 44 gibt über die Verzweigungsstelle 45 ein Signal WR2 an die Summationsstelle 9 mit positivem Vorzeichen ab. Das Signal WR2 gelangt ferner zu einem Blocker 46 und zum ersten Eingang eines UND-Gliedes 47. Der zweite Eingang des UND-Gliedes 47 ist mit dem Ausgang des Blockers 46 verbunden. Das UND-Glied 47 gibt ausgangsseitig über einen weiteren Blocker 48 ein Signal WR3 mit positivem Vorzeichen an die Summationsstelle 9 ab.

In Fig. 4 sind zusätzliche Einrichtungen für einen «Schnellrücklauf der Elektrode 17 bei Dauer-Kurzschluss» und für ein «Schnellabsenken der Elektrode 17 bei Abrissgefahr des Lichtbogens» dargestellt. An die Verzweigungsstelle 4 ist ein Signalbereichsmelder 49 geschaltet. Der Ausgang des Signalbereichsmelders 49 ist mit dem ersten Eingang eines UND-Gliedes 50 verbunden, dessen zweiter Eingang mit dem Ausgangssignal L des Signalbereichsmelders 43 (siehe Fig. 3) beaufschlagt wird. Ausgangsseitig steuert das UND-Glied 50 einen Schalter 51 an. Der Schalter 51 schaltet ein Signal S = zusätzlicher Senken-Geschwindigkeits-Sollwert bei Abrissgefahr des Lichtbogens mit positivem Vorzeichen auf die Summationsstelle 24.

Das an der Verzweigungsstelle 36 anstehende Signal $U_{dist}$ wird einem Signalbereichsmelder 52 zugeführt, dem ein Zeitglied 53 nachgeschaltet ist. Der Ausgang des Zeitgliedes 53 ist mit dem ersten Eingang eines UND-Gliedes 54 verbunden, dessen zweiter Eingang mit dem Signal L des Signalbereichsmelders 43 (siehe Fig. 3) beaufschlagt wird. Ausgangsseitig steuert das UND-Glied 54 einen Schalter 55 an. Der Schalter 55 schaltet ein Signal H = zusätzlicher Heben-Geschwindigkeitssollwert bei Dauerkurzschluss mit positivem Vorzeichen auf die Summationsstelle 24.

Nachfolgend wird die Funktionsweise der Regeleinrichtung zur Regelung eines Gleichstrom-Lichtbogenofens mit ihren Zusatzeinrichtungen beschrieben. Es sind zwei unabhängige Regelkreise vorgesehen, und zwar ein Stromregelkreis (Strom $I_d$) mit dem Stromrichter 10 als Stellglied und ein Spannungsregelkreis (Spannung $U_d$) mit der Elektrodenverstelleinrichtung 30 als Stellglied. Beide Regelkreise sind über die gemeinsame Regelstrecke, den Ofen (Drosselspule 11, Ofenwiderstand 12, Elektrode 17) miteinander verknüpft.

Die Sollwerte $I_{dsoll}$, $U_{dsoll}$ sind entweder über Sollwertpotentiometer frei und unabhängig voneinander einstellbar oder sie kommen von einem übergeordneten Leistungsregelkreis mit fester Leistungs-Strom-Spannungs-Zuordnung.

Der Stromregler 3 wird wegen der Vorsteuerung des Stromrichters 10 mit den Lichtbogen-spannungen $U_{oist}$ über die Summationsstelle 5 auf den kurzgeschlossenen Ofen optimiert, d.h. auf einen ohmsch-induktiven Lastkreis. Durch die Vorsteuerung werden die Ofeneigenschaften aus dem Führungsverhalten des Stromregelkreises eliminiert.

Der Stromregler 3 selbst hat PI-Übertragungsverhalten mit auf den Widerstand 12 des kurzgeschlossenen Ofenkreises und die Induktivität der Drosselspule 11 optimierten Parametern.

Beim Lichtbogenabriss bzw. vor dem Aufsetzen der Elektrode 17 auf den Schrott oder das Schmelzbad würde der Stromregler 3 wegen des fehlenden Stromistwertes $I_{dist}$ immer in die Gleichrichter-Grenzlage weglaufen. Der Gleichstrom $I_d$ würde damit nicht entsprechend dem Führungsübertragungsverhalten des Stromregelkreises aufgebaut, sondern zunächst stark überschwingen, im Extremfall auf den durch die Drosselspule 11 begrenzten Scheitelwert.

Dies wird durch die negative Rückführung der in der Summationsstelle 5 gebildeten Summe von Stromreglerausgangssignal und Vorsteuerwert $U_{oist}$ auf den Stromreglereingang bei $I_{dist} = 0$ verhindert, d.h. Schalter 8 ist geschlossen, wenn L = 0 und geöffnet, wenn L = 1. Da bei $I_{dist} = 0$ die Ofenspannung $U_{oist}$ gleich der Stromrichterausgangsspannung $U_d$ ist (kein Spannungsabfall über der Drosselspule), wird durch diese Rückführung zur Summationsstelle 2 dem Stromregler 3 ein Stromistwert $I_{dist}$ von der Grösse des eingestellten Stromsollwertes $I_{dsoll}$ vorgetäuscht. Beim Verlassen des Betriebszustandes $I_{dist} = 0$ befindet sich der Stromregler 3 im richtigen Arbeitspunkt und auch der Vorsteuerwert des Stromrichters 10 entspricht dem aktuellen Momentan-Wert der Ofenspannung. Der Aussteuergrad des Stromrichters 10 bei $I_{dist} = 0$ ist damit durch den eingestellten Stromsollwert definiert.

Bei maximalem Stromsollwert $I_{dsoll}$ wäre durch diese Massnahme allein noch kein Fortschritt hinsichtlich des Einschwingverhaltens des Laststroms $I_d$ erzielt. Deshalb wird beim logischen Signal L = 0 (d.h. $I_{dist} = 0$) der Gleichstrom-Sollwert über den geschlossenen Schalter 38 (Schalter 38 wird bei L = 0 geschlossen, bei L = 1 geöffnet) auf einen fest eingestellten Wert $I_{dsoll}^*$ reduziert. Es ist auch möglich, den Gleichstrom-Sollwert um einen festen Faktor herunterzusetzen. Der Stromrichter befindet sich damit bei $I_{dist} = 0$ in einem fest eingestellten oder dem vorgegebenen Sollwert entsprechenden Aussteuerungszustand. Welcher Wert $I_{dsoll}^*$ bzw. welcher Faktor für ein günstiges Einschwingverhalten gewählt werden muss, kann leicht auf der Anlage gewonnen oder auch für den Kurzschluss (Spannungszeitfläche an der Drosselspule 11 soll einen Strom $I_d$ entsprechend dem eingestellten Sollwert aufbauen) voraus berechnet werden.

Der Übergang vom so gesteuerten Betrieb bei $I_{dist} = 0$ auf den geregelten Betrieb bei $I_{dist} > 0$ vollzieht sicht dann wie nach einem Sollwertsprung auf den Stromregler 3. Bezüglich des Zündverhaltens des Lichtbogens hat die Beschränkung auf einen bestimmten Aussteuerungszustand des Stromrichters 10 bei $I_{dist} = 0$ keine Konsequenzen, denn einerseits ist der maximale Momentanwert der Stromrichterausgangsspannung $U_d$ gerade im teilausgesteuerten Betrieb sehr viel grösser als der jeweilige Mittelwert, andererseits ist eine Zündung des Lichtbogens durch die angelegte Spannung ohnehin nur bei sehr kleiner Wegstrecke s, d.h. in der Nähe des Ofenkurzschlusses möglich.

Der Mittelwert der Lichtbogenspannung $U_{0ist}$ wird indirekt über den gewählten Elektrodenabstand s geregelt. Natürlich ist die mittlere Lichtbogenspannung eigentlich durch die Ausgangsspannung des Stromrichters 10 gegeben. Diese wird vom Stromregler 3 jeweils so eingestellt, dass der Ofenstrom $I_{dist}$ gleich dem eingestellten Sollwert $I_{dsoll}$ ist. Durch die Elektrodenverstelleinrichtung 30 darf dieser Stromregelkreis nicht behindert werden, der Lichtbogen darf nur bis zu einer solchen Länge gezogen werden, bei der der Stromregler 3 noch genügend Stell-Reserve bzw. Spannungshub zur Verfügung hat, um den Ofenstrom $I_{dist}$ stabil zu halten. Unterhalb dieser Grenze kann die Ofenspannung $U_d$ allerdings frei gewählt werden und über die durch die Elektrodenverstelleinrichtung 30 eingestellte Lichtbogenlänge s auch so nachgeführt werden, dass die Lichtbogenspannung im zeitlichen Mittelwert gleich dem vorgegebenen Sollwert $U_{dsoll}$ ist. Der Zeitbereich, über den der Spannungsistwert zu mitteln ist, wird hierbei in erster Linie durch die in der Elektrodenverstelleinrichtung 30 gegebenen Reaktionszeiten und Verzögerungszeiten bestimmt.

Da diese Zeiten gross sind gegenüber den Ausregelzeiten im Stromregelkreis, kann bis auf den Spezialfall des Lichtbogenabrisses für den Spannungsregelkreis von der Randbedingung $I_{dist} = I_{dsoll}$ ausgegangen werden. Die Elektrodenverstelleinrichtung 30, z.B. eine hydraulische Pumpe mit einer Verstellmechanik und einem Elektrodengeschwindigkeitsregler, kann für den überlagerten Spannungsregelkreis vereinfacht als ein Verzögerungsglied erster Ordnung zusammengefasst werden.

Der Spannungsregler 20 hat damit ebenfalls PI-Verhalten. Da der Zusammenhang zwischen Lichtbogenspannung $U_{0ist}$ und Lichtbogenlänge s (= Elektrodenabstand) nicht linear ist und auch vom Lichtbogenstrom $I_{dist}$ abhängt, können für den Spannungsregler 21 keine optimalen Parameter fest eingestellt werden, vielmehr muss das Zeitverhalten des Reglers 21 dem jeweiligen aktuellen Ofenbetriebspunkt angepasst werden (adartierbarer Regler).

Der Spannungssollwert $U_{dsoll}$ wird zunächst der Transformatorstufe des Stromrichtertransformators und damit dem möglichen Spannungshub des Stromrichters 10 entsprechend mittels des Begrenzers 18 so begrenzt, dass der Stromrichter 10 stationär maximal knapp unterhalb der Gleichrichtergrenzlage betrieben wird. Der Sollwert $U_{dsoll}$ wird mit Hilfe des Glättungsgliedes 19 geglättet, um bei Spannungssollwertsprüngen kein Überschwingen des Istwertes $U_{dist}$ zu bekommen, was unter Umständen ein Abreissen des Lichtbogens bewirken könnte. Der dem Spannungsregler 21 über die Summationsstelle 20 zugeführte Istwert $U_{dist}$ wird mittels des Glättungsgliedes 37 ebenfalls geglättet.

Beim Abreissen des Lichtbogens ist der Spannungsistwert $U_{0ist}$ am Ofen gleich der Stromrichterausgangsspannung $U_d$. Ähnlich wie beim Stromregler 3 sind daher für den Spezialfall des Lichtbogenabrisses spezielle Steuereingriffe vorgesehen. Vor dem Lichtbogenabriss wird die Lichtbogenspannung $U_{0ist}$ mit zunehmender Lichtbogenlänge s ebenfalls ansteigen. Das bedeutet, dass bei positiver Differenz $= U_{dsoll} - U_{dist}$ die Elektrode 17 angehoben wird, um die Lichtbogenlänge zu vergrössern.

Beim Lichtbogenabriss ($I_{dist} = 0$) entspricht der Spannungsistwert $U_{dist}$ irgendeinem für den Stromaufbau günstigen Aussteuerungszustand des Stromrichters 10 (wie vorstehend beschrieben), der für den Spannungsregler 21 ohne Belang ist. Der Ofenspannungsistwert $U_{dist}$ wird daher mittels des geschlossenen Schalters 37 für $I_d = 0$ ebenfalls zu Null getastet (Schalter 37 wird bei $L = 0$ geschlossen, bei $L = 1$ geöffnet). Mit dem verbleibenden Sollwert $U_{dsoll}$ würde der Spannungsregler 21 über den I-Kanal nach kurzer Zeit mit maximaler Geschwindigkeit die Elektrode 17 heben, was genau verkehrt wäre, denn zum erneuten Zünden des Lichtbogens muss die Elektrode 17 gesenkt werden, im Extremfall bis zum Aufsetzen auf den Schrott. Dem Spannungsregler 21 ist daher eine Regelsinnumschaltung – Verstärker 26 – nachgeschaltet, die abhängig vom gleichen Signal $I_d = 0$ das Vorzeichen des vom Spannungsregler 21 abgegebenen Elektrodenverstellungs-Geschwindigkeitssollwert invertiert (Schalter 28 ist geschlossen, wenn $L = 1$ und geöffnet, wenn $L = 0$). Mit diesen Massnahmen würde die Elektrode 17 nach einem Lichtbogenabriss praktisch immer mit der Maximalgeschwindigkeit in den Schrott fahren.

Führt man hingegen zusätzlich den Ausgang des Spannungsreglers 21 für $I_d = 0$ über die Verzweigungsstelle 22 negativ auf den Eingang des Reglers 21 über den Schalter 23 und die Summationsstelle 20 zurück, so entspricht die Geschwindigkeit immer exakt dem eingestellten Spannungssollwert (Schalter 23 ist geschlossen, wenn $L = 0$ und geöffnet, wenn $L = 1$).

Bei Abriss eines kurzen Lichtbogens (kleine Spannung $U_{dsoll}$, kleiner Elektrodenabstand s) wird die Elektrode 17 also langsam abgesenkt. Bei Abriss eines langen Lichtbogens (grosse Spannung $U_{dsoll}$, grosser Elektrodenabstand s) wird die Elektrode 17 schnell abgesenkt.

Zusätzlich zu dem bisher beschriebenen sind noch folgende in Fig. 4 dargestellte Steuereingriffe auf die Elektrodenverstelleinrichtung 30 vorgesehen, wobei jeweils der überlagerte Spannungsregelkreis umgangen wird und zusätzliche Geschwindigkeitssollwerte über die Summationsstelle 24 direkt auf das Stellglied (= Elektrodenverstelleinrichtung 30) geschaltet werden. Bei Dauerkurzschluss wird zusätzlich zu dem vom Spannungsregler 21 gelieferten Elektrodenverstellungs-Geschwindigkeitssollwert (der auch in Richtung «Heben» der Elektrode 17 wirkt, da der Istwert $U_{dist}$ klein ist) über den geschlossenen Schalter 55 und die Summationsstelle 24 ein «Heben»-Geschwindigkeitssollwert H addiert, um einen Schnellrücklauf der Elektroden zu erreichen und um den Ofen möglichst schnell in einen Betriebspunkt zu führen, in dem wieder Wirkleistung umgesetzt wird.

Der Dauerkurzschluss (beispielsweise durch nachfallenden Schrott verursacht) wird folgendermassen erkannt. Überschreitet der Mittelwert der Ofenspannung $U_{dist}$ für eine am Zeitglied 23 einstellbare Zeit einen am Signalbereichsmelder 52 einstellbaren Pegel und liegt Betrieb vor ($I_d > 0$, d.h. L = 1) so befindet sich der Ofen im Kurzschluss.

Die Gefahr des Lichtbogenabreissens (beispielsweise durch rasches Abschmelzen von Schrott oder Zusammenbrechen des Schrottgebirges verursacht) wird folgendermassen erkannt: Verlässt der Stromreglerausgang (Verzweigungsstelle 4) die Nullage in Richtung «mehr Gleichrichterbetrieb» um mehr als einen am Signalbereichsmelder 49 einstellbaren Betrag und liegt Betrieb vor ($I_d > 0$, d.h. L = 1) so besteht die Gefahr, dass der Lichtbogen abreisst. Dies ist deshalb so, weil der Stromrichter 10 mit der Lichtbogenspannung $U_{0ist}$ vorgesteuert ist, und der Stromreglerausgang damit stationär immer nahe Null ist. Nur wenn der Stromistwert $I_{dist}$ kleiner als der Sollwert $I_{dsoll}$ ist, verlässt der Stromregler 3 seine Nullage, weil der Stromrichter 10 an der Gleichrichtergrenzlage angelangt ist und die Gegenspannung so gross ist, dass trotzdem ein zu kleiner Strom $I_d$ fliesst.

Zusätzlich zu dem vom Spannungsregler 21 gelieferten Elektrodenverstellungs-Geschwindigkeitssollwert (der auch in Richtung «Senken» wirkt, da der Istwert $U_{dist}$ sehr gross ist) wird über den geschlossenen Schalter 51 und die Summationsstelle 24 ein «Senken»-Geschwindigkeitssollwert s addiert, um den Elektrodenabstand s vom Schrott (bzw. Schmelzbad) möglichst schnell soweit zu verringern, dass der Lichtbogenabriss verhindert wird und der Stromrichter 10 wieder in die Lage kommt, mit dem ihm verfügbaren Spannungshub die Stromregelaufgabe zu bewältigen.

Gelingt dies nicht innerhalb einer am Zeitglied 40 (siehe Fig. 2) einstellbaren Zeit, so wird bewusst für eine am Blocker 41 einstellbare Zeit mittels eines der Summationsstelle 9 zugeleiteten Wechselrichterbefehls WR1 auf den Steuersatz des Stromrichters 10 der Ofenstrom $I_d$ abgebaut. Damit wird verhindert, dass bei einer Elektrodenverstellung von Hand der Lichtbogen versehentlich zu lang oder gar aus dem Deckel gezogen wird.

Bei abgeschaltetem Ofen oder bei einer Elektrodenverstellung von Hand wird der vom Spannungsregler 21 gelieferte Geschwindigkeitssollwert vorsorglich über den Schalter 29 auf Nullpotential gelegt, um ungewollte oder unnötige Elektrodenbewegungen zu vermeiden.

Durch Impulsverschiebung am Stromrichter 10 in die Wechselrichtergrenzlage wird der Ofenstrom $I_d$ sehr rasch abgebaut. Bei Störungen oder auch beim betriebsmässigen Ausschalten wird diese Möglichkeit genutzt, um die Schaltkontakte eines dem Stromrichter 10 vorgeschalteten Leistungsschalters zu schonen.

Zusätzlich wird ein Wechselrichterbefehl WR2 auf die Summationsstelle 9 (siehe Fig. 3) gegeben, wenn der Stromistwert $I_{dist}$ einen am Signalbereichsmelder 44 einstellbaren Grenzwert überschreitet. Dieser Grenzwert wird so gewählt, dass er betriebsmässig auch unter Berücksichtigung der Welligkeit des Ofenstroms nicht erreicht wird. Bei einem Kurzschluss während des Betriebes wird der Grenzwert dann allerdings überschritten und es wird durch den daraus abgeleiteten Wechselrichterbefehl WR2 sichergestellt, dass kurzzeitig keine Impulse im Gleichrichterbetrieb mehr entstehen können. Die Wechselrichtergrenzlage wird so eingestellt, dass gerade keine positive Spannungszeitfläche an die Last gelegt wird.

Diejenigen Halbleiter, die bei Eintritt des Kurzschlusses gerade den Laststrom geführt haben und praktisch den ganzen Stoss allein bewältigen müssen, werden so zu dem frühest möglichen Zeitpunkt abkommutiert, ab dem der Abbau des Kurzschlussstromes durch den Stromrichter 10 kontinuierlich fortgesetzt werden kann. Die Lastintegrale und damit die thermische Beanspruchung der am ungünstigsten belasteten Halbleiter werden dadurch minimal.

Da der Wechselrichterbefehl WR2 nur so lange ansteht, wie der Stromistwert grösser als der am Signalbereichsmelder 44 eingestellte Grenzwert ist, wird der Laststrom $I_{dist}$ nicht abgebaut, sondern durch den Stromregler 3 beim Unterschreiten des Sollwertes $I_{dsoll}$ abgefangen und wieder auf den alten Wert vor Eintritt des Kurzschlusses asugeregelt. In ungünstigen Ofenbetriebszuständen können Kurzschlüsse und Widerzünden des Lichtbogens in sehr kurzer zeitlicher Folge auftreten. Eine solche kurze Folge von Stossbelastungen würde die Halbleiter thermisch unzulässig beanspruchen, da sie zwischenzeitlich nicht abkühlen können.

Durch die Einrichtung gemäss Fig. 3, bestehend aus den Blockern 46 und 48 sowie dem UND-Glied 47 wird dies verhindert. Folgt ein zweiter Überstrom dem vorausgegangenen in einem zeitlich kürzeren Abstand als am Blocker 46 einstellbar, so wird für eine am Blocker 48 einstellbare Zeit über den Wechselrichterbefehl WR3 an die Summationsstelle 9 der Ofenstrom $I_{dist}$ abgebaut, so dass sich zwischenzeitlich das Bad beruhigen kann, Spritzer ablaufen können oder ähnliches. Nach dieser durch den Blocker 48 bestimmten Zeit wird der Ofen von den Reglern automatisch wieder in einen stabilen Betriebspunkt geführt.

**Patentansprüche**

1. Regeleinrichtung für einen direkt beheizten Gleichstrom-Lichtbogenofen zum Schmelzen von Metall, mit einer Elektrodenverstelleinrichtung zur Einstellung des Abstandes zwischen Elektrode und Schmelzbad, mit einem Stromrichter zur Speisung der Elektrode mit Gleichstrom, mit einem Stromregler, dem eingangsseitig die Differenz zwischen einem vorgebbaren Gleichstrom-Sollwert und einem gemessenen Gleichstrom-Istwert zugeführt wird und dessen Ausgangssignal als Steuerspannungssignal für den Stromrichter dient sowie mit einem Spannungsregler, dem eingangsseitig die Differenz zwischen einem vorgebbaren Gleichspannungs-Sollwert und einem gemessenen Gleichspannungs-Istwert zugeführt wird und der ein Ausgangssignal an die Elektrodenverstelleinrichtung abgibt, dadurch gekennzeichnet, dass das Ausgangssignal des Stromreglers mit dem Gleichspannungs-Istwert ($U_{dist}$) als Vorsteuerwert summiert wird.

2. Regeleinrichtung nach Anspruch 1, dadurch gekennzeichnet, dass sowohl Stromregler (3) als auch Spannungsregler (21) als PI-Regler ausgebildet sind.

3. Regeleinrichtung nach wenigstens einem der vorstehenden Ansprüche, dadurch gekennzeichnet, dass bei Lichtbogenabriss und vor dem ersten Zünden des Lichtbogens die Summe aus Stromregler-Ausgangssignal und Vorsteuerwert über einen Schalter (8) negativ auf den Eingang des Stromreglers (3) geführt wird, der Gleichstrom-Sollwert ($I_{dsoll}$) über einen Schalter (38) auf einen vorbestimmten Festwert ($I_{dsoll}$*) eingestellt wird, der Gleichspannungs-Istwert ($U_{dist}$) über einen Schalter (37) auf den Wert Null begrenzt wird, eine Regelsinnumschaltung des Ausgangssignales des Spannungsreglers (21) mittels eines Schalters (28) veranlasst wird und das Ausgangssignal des Spannungsreglers (21) negativ auf dessen Eingang über einen Schalter (23) geführt wird.

4. Regeleinrichtung nach wenigstens einem der vorstehenden Ansprüche, dadurch gekennzeichnet, dass der Gleichspannungs-Sollwert ($U_{dsoll}$) mittels eines Begrenzers (18) in Abhängigkeit der eingestellten Stufe eines dem Stromrichter (10) vorgeschalteten Transformators begrenzbar ist.

5. Regeleinrichtung nach wenigstens einem der vorstehenden Ansprüche, dadurch gekennzeichnet, dass Glättungsglieder (19, 35) zur Glättung von Gleichspannungs-Sollwert ($U_{dsoll}$) und -Istwert ($U_{dist}$) vorgesehen sind.

6. Regeleinrichtung nach wenigstens einem der vorstehenden Ansprüche, dadurch gekennzeichnet, dass zur Erkennung eines Dauerkurzschlusses zwischen Elektrode (17) und Schmelzbad ein Signalbereichsmelder (52) mit einstellbarem Ansprechpegel sowie ein nachgeschaltetes Zeitglied (53) vorgesehen sind, wobei dem Signalbereichsmelder (52) der Gleichspannungs-Istwert ($U_{dist}$) zuführbar ist (Fig. 4).

7. Regeleinrichtung nach wenigstens einem der vorstehenden Ansprüche, dadurch gekennzeichnet, dass bei Auftreten eines Dauerkurzschlusses zwischen Elektrode (17) und Schmelzbad der Elektrodenverstelleinrichtung (30) ein zusätzliches «Heben»-Signal (H) über einen Schalter (55) zuführbar ist (Fig. 4).

8. Regeleinrichtung nach wenigstens einem der vorstehenden Ansprüche, dadurch gekennzeichnet, dass zur Erkennung einer Lichtbogenabriss-Gefahr das Ausgangssignal des Stromreglers (3) einem Signalbereichsmelder (49) mit einstellbarem Ansprechpegel zuführbar ist (Fig. 4).

9. Regeleinrichtung nach wenigstens einem der vorstehenden Ansprüche, dadurch gekennzeichnet, dass bei Auftreten einer Lichtbogenabriss-Gefahr der Elektrodenverstelleinrichtung (30) ein zusätzliches «Senken»-Signal (S) über einen Schalter (51) zuführbar ist (Fig. 4).

10. Regeleinrichtung nach wenigstens einem der vorstehenden Ansprüche, dadurch gekennzeichnet, dass bei einer Verstellung der Elektrode (17) von Hand das der Elektrodenverstelleinrichtung (30) zugeleitete Signal mittels eines Schalters (29) auf den Wert Null begrenzbar ist.

11. Regeleinrichtung nach wenigstens einem der vorstehenden Ansprüche, dadurch gekennzeichnet, dass das Ausgangssignal des Stromreglers (3) einer Serienschaltung aus einem Signalbereichsmelder (39) mit einstellbarem Ansprechpegel, einem Zeitglied (40) und einem Blokker (41) zugeleitet wird, wobei der Blocker (41) ein zusätzliches Steuerspannungssignal (WR1) zum Abbau des Gleichstromes ($I_{dist}$) an den Stromrichter (10) abgibt (Fig. 2).

12. Regeleinrichtung nach wenigstens einem der vorstehenden Ansprüche, dadurch gekennzeichnet, dass einem Signalbereichsmelder (44) mit einstellbarer Ansprechschwelle eingangsseitig der Gleichstrom-Istwert ($I_{dist}$) zugeführt wird und er ausgangsseitig ein zusätzliches Steuerspannungssignal (WR2) zur kurzzeitigen Begrenzung des Gleichstromes ($I_{dist}$) an den Stromrichter (10) abgibt (Fig. 3).

13. Regeleinrichtung nach Anspruch 12, dadurch gekennzeichnet, dass das Ausgangssignal (WR2) des Signalbereichsmelders (44) einem Blocker (46) und dem ersten Eingang eines UND-Gliedes (47) zugeführt wird, dass der Ausgang des Blockers (46) mit dem zweiten Eingang des UND-Gliedes (47) verbunden ist und dass der Ausgang des UND-Gliedes (47) mit einem Blocker (48) verbunden ist, der ein zusätzliches Steuerspannungssignal (WR3) zum Abbau des Gleichstromes ($I_d$) an den Stromrichter (10) abgibt (Fig. 3).

**Claims**

1. Controlling device for a directly-heated direct-current arc furnace for melting metal, comprising an electrode adjusting device for adjusting the distance between electrode and melt, a static convertor for supplying the electrode with direct current, a current controller the input of which is supplied with the difference between a predeterminable nominal direct-current value and a measured actual direct-current value and the output signal of which is used as a control voltage signal for the static convertor, and comprising a voltage controller the input of which is supplied with the difference between a predeterminable nominal direct-voltage value and a measured actual direct-voltage value and which emits an output signal to the electrode adjusting device, characterized in that the output signal of the current controller is summed with the actual direct-voltage value ($U_{dist}$) as pilot control value.

2. Controlling device according to Claim 1, characterized in that both the current controller (3) and the voltage controller (21) are constructed as PI controllers.

3. Controlling device according to at least one of the preceding claims, characterized in that with an interruption of the arc and before the first striking of the arc, the sum of current controller output signal and pilot control value is negatively conducted via a switch (8) to the input of the current controller (3), the nominal direct-current value ($I_{dsoll}$) is set via a switch (38) to a predetermined fixed value ($I_{dsoll}*$), the actual direct-voltage value ($U_{dist}$) is limited to a value of zero via a switch (37), a switching of the direction of control of the output signal of the voltage controller (21) is effected by means of a switch (28) and the output signal of the voltage controller (21) is negatively conducted to its input via a switch (23).

4. Controlling device according to at least one of the preceding claims, characterized in that the nominal direct voltage value ($U_{dsoll}$) can be limited by means of a limiter (18) as a function of the tap set on a transformer preceding the static convertor (10).

5. Controlling device according to at least one of the preceding claims, characterized in that smoothing sections (19, 35) are provided for smoothing the nominal direct-voltage value ($U_{dsoll}$) and actual direct-voltage value ($U_{dist}$).

6. Controlling device according to at least one of the preceding claims, characterized in that a signal limit monitor (52) with adjustable response level and following timing element (53) are provided for detecting a continuous short circuit between electrode (17) and melt, in which arrangement the actual direct voltage value ($U_{dist}$) can be supplied to the signal limit monitor (52) (Figure 4).

7. Controlling device according to at least one of the preceding claims, characterized in that the electrode adjusting device (30) can be supplied with an additional "lift" signal (H) via a switch (55) when a continuous short circuit occurs between electrode (17) and melt (Figure 4).

8. Controlling device according to at least one of the preceding claims, characterized in that the output signal of the current controller (3) can be supplied to a signal limit monitor (49) with adjustable response level to detect the danger of an arc interruption (Figure 4).

9. Controlling device according to at least one of the preceding claims, characterized in that an additional "layer" signal (S) can be supplied via a switch (51) to the electrode adjusting device (30) when the risk of an arc interruption occurs (Figure 4).

10. Controlling device according to at least one of the preceding claims, characterized in that the signal supplied to the electrode adjusting device (30) can be limited to a value of zero by means of a switch (29) when the electrode (17) is manually adjusted.

11. Controlling device according to at least one of the preceding claims, characterized in that the output signal of the current controller (3) is supplied to a series circuit of a signal limit monitor (39) with adjustable response level, a timing element (40) and a blocking circuit (41), in which arrangement the blocking circuit (41) emits an additional control voltage signal (WR1) for reducing the direct current ($I_{dist}$) to the static convertor (10) (Figure 2).

12. Controlling device according to at least one of the preceding claims, characterized in that the actual direct-current value ($I_{dist}$) is supplied to the input of a signal limit monitor (44) with adjustable response threshold and that its output emits an additional control voltage signal (WR2) for short-time limiting of the direct current ($I_{dist}$) to the static convertor (10) (Figure 3).

13. Controlling device according to Claim 12, characterized in that the output signal (WR2) of the signal limit monitor (44) is supplied to a blocking circuit (46) and the first input of an AND gate (47), that the output of the blocking circuit (46) is connected to the second input of the AND gate (47) and that the output of the AND gate (47) is connected to a blocking circuit (48) which emits an additional control voltage signal (WR3) for reducing the direct current ($I_d$) to the static convertor (10) (Figure 3).

**Revendications**

1. Dispositif de régulation pour un four à arc à courant continu à chauffage direct destiné à la fusion de métal, avec un dispositif de déplacement des électrodes pour régler la distance entre l'électrode et le bain de métal en fusion, avec un redresseur pour alimenter l'électrode en courant continu, avec un régulateur de courant qui reçoit à son entrée la différence entre une valeur de consigne allouable et une valeur réelle mesurée de courant continu, et dont le signal de sortie sert de signal de tension de commande pour le redresseur, et avec un régulateur de tension qui reçoit à son entrée la différence entre une valeur de consigne allouable et une valeur réelle mesurée de tension continue, et qui délivre un signal de sortie au dispositif de déplacement d'électrode, caractérisé par le fait que le signal de sortie du régulateur de courant est additionnée avec la valeur réelle de tension continue ($U_{dist}$), comme valeur pilote.

2. Dispositif de régulation selon la revendication 1, caractérisé par le fait que tant le régulateur de courant (3) que le régulateur de tension (21) sont réalisés sous la forme de régulateurs du type proportionnel et intégral.

3. Dispositif de régulation selon l'une au moins des revendications précédentes, caractérisé par le fait que lors de la rupture de l'arc électrique, et avant le premier amorçage de l'arc électrique, la somme du signal de sortie du régulateur de courant et de la valeur pilote est, par l'intermédiaire d'un commutateur (8), appliquée négativement à l'entrée du régulateur de courant (3), que la valeur de consigne de courant continu ($U_{dsoll}$) est, par l'intermédiaire d'un commutateur (38), réglée à une valeur fixe allouée ($I_{dsoll}^*$), que la valeur réelle de tension continue ($U_{dist}$) est, par l'intermédiaire d'un commutateur (37), limitée à la valeur zéro, qu'une inversion du sens de régulation du signal de sortie du régulateur de tension (21) est opérée au moyen d'un commutateur (28), et que le signal de sortie du régulateur de tension (21) est appliqué négativement à l'entrée de ce dernier par l'intermédiaire d'un commutateur (23).

4. Dispositif de régulation selon l'une au moins des revendications précédentes, caractérisé par le fait que la valeur de consigne de tension continue ($U_{dsoll}$) peut, au moyen d'un limiteur (18), être limitée en fonction de l'étage réglé d'un transformateur monté en amont du convertisseur de courant (10).

5. Dispositif de régulation selon l'une au moins des revendications précédentes, caractérisé par le fait qu'il est prévu des organes de lissage (19, 35) afin de lisser la valeur de consigne et la valeur réelle de tension continue ($U_{dsoll}$ et $U_{dist}$).

6. Dispositif de régulation selon l'une au moins des revendications précédentes, caractérisé par le fait qu'afin de déceler un court-circuit permanent entre l'électrode (17) et le bain, il est prévu un avertisseur de plage de signaux (52) à niveau de réponse réglable suivi d'un temporisateur (53), la valeur réelle de tension continue ($U_{dist}$) pouvant être amenée à l'avertisseur de plage de signaux (52) (Figure 4).

7. Dispositif de régulation selon l'une au moins des revendications précédentes, caractérisé par le fait que lors de l'apparition d'un court-circuit permanent entre l'électrode (17) et le bain, un signal «levage» (H) complémentaire peut, par l'intermédiaire d'un commutateur (55), être amené au dispositif de déplacement d'électrode (30) (Figure 4).

8. Dispositif de régulation selon l'une au moins des revendications précédentes, caractérisé par le fait que pour déceler un risque de rupture de l'arc électrique, le signal de sortie du régulateur de courant (3) peut être amené à un avertisseur de plage de signaux (49) à niveau de réponse réglable.(Figure 4).

9. Dispositif de régulation selon l'une au moins de revendications précédentes, caractérisé par le fait que lors de l'apparition d'un risque de rupture de l'arc électrique, un signal «descente» (5) complémentaire peut, par l'intermédiaire d'un commutateur (51), être amené au dispositif de déplacement d'électrode (30). (Figure 4).

10. Dispositif de régulation selon l'une au moins des revendications précédentes, caractérisé par le fait qu'en vue d'un déplacement manuel de l'électrode (17), le signal transmis au dispositif de déplacement d'électrode (30) peut, au moyen d'un commutateur (29), être limité à la valeur zéro.

11. Dispositif de régulation selon l'une au moins des revendications précédentes, caractérisé par le fait que le signal de sortie du régulateur de courant (3) est transmis à un montage série constitué d'un avertisseur de plage de signaux (39) à niveau de réponse réglable, d'un temporisateur (40) et d'un bloqueur (41), le bloqueur (41) délivrant au convertisseur de courant (10) un signal de tension de commande supplémentaire (WR1) destiné à annuler le courant continu ($I_{dist}$). (Figure 2).

12. Dispositif de régulation selon l'une au moins des revendications précédentes, caractérisé par le fait que la valeur réelle de courant continu ($I_{dist}$) est amenée côté entrée à un avertisseur de plage de signaux (44) à seuil de réponse réglable, lequel délivre côté sortie au convertisseur de courant (10), un signal de tension de commande supplémentaire (WR2) destiné à limiter temporairement le courant continu ($I_{dist}$). (Figure 3).

13. Dispositif de régulation selon la revendication 12, caractérisé par le fait que le signal de sortie (WR2) de l'avertisseur de plage de signaux (44) est amené à un bloqueur (46) et à la première entrée d'un circuit ET (47), que la sortie du bloqueur (46) est reliée à la deuxième entrée du circuit ET (47), et que la sortie du circuit ET (47) est reliée à un bloqueur (48) qui délivre au convertisseur de courant (10) un signal de tension de commande supplémentaire (WR3) destiné à annuler le courant continu ($I_{dist}$). (Figure 3).

Fig. 1

Fig. 2

Fig. 3

Fig. 4